Europäisches Patentamt

European Patent Office

Office européen des brevets

(11) Publication number: **0 308 043**
**A2**

## EUROPEAN PATENT APPLICATION

(21) Application number: **88306255.6**

(51) Int. Cl.⁴: **G06F 1/00**

(22) Date of filing: **08.07.88**

(30) Priority: **17.09.87 US 98595**

(43) Date of publication of application:
**22.03.89 Bulletin 89/12**

(84) Designated Contracting States:
**DE FR GB**

(71) Applicant: **Hewlett-Packard Company**
**Mail Stop 20 B-O 3000 Hanover Street**
**Palo Alto California 94304(US)**

(72) Inventor: **Rogers, Donald L.**
**564 Edelweiss Drive**
**San Jose California 95136(US)**

(74) Representative: **Colgan, Stephen James et al**
**CARPMAELS & RANSFORD 43 Bloomsbury**
**Square**
**London WC1A 2RA(GB)**

(54) **Apparatus and method for tracking and identifying printed circuit assemblies.**

(57) A method and apparatus for tracking and identifying printed circuit assemblies (101-105, 121-128) is presented. Information about each printed circuit assembly (PCA) (101-105, 121-128), including the current revision level of the PCA is stored within a non-volatile random access memory (RAM) (617) within each PCA. The stored information may be accessed by a user through a dedicated bus (100) and hardware designed for this task. Additionally, through the dedicated bus (100) and hardware, the user may update the information within the printed circuit assembly.

FIG 6

EP 0 308 043 A2

## APPARATUS AND METHOD FOR TRACKING AND IDENTIFYING PRINTED CIRCUIT ASSEMBLIES

### Background

In large computer systems, numerous circuit assemblies (PCA) are connected together at a computer backplane. Each PCA may be individually modified and updated. This modification is typically not discernable from the appearance of the PCA. Therefore, information is often placed on a label on the PCA.

Often the modification or update of one PCA in a computer system may require modification of one or more PCAs in the computer system in order for the computer system to function properly. Therefore, in order to update one PCA it may be necessary to examine several PCAs in order to determine versions of which PCAs are extant in the system. This can be extremely time consuming and inconvenient.

Additional problems arise when PCAs are remotely updated. That is, updating certain PCAs may not require the exchanging of hardware but only the replacing of software. The replacement software may be transferred through telephone lines and installed in a PCA without a service representative being required to visit the cite of the computing system. In this case, however, the service representative would be unable to read the labels on other PCAs within the computing system. Further, he would be unable to relabel the updated PCA.

### Summary of the Invention

In accordance with the preferred embodiment of the present invention, a method and apparatus for tracking and identifying printed circuit assemblies is presented. Within each printed circuit assembly is a non-volatile random access memory (RAM). Within each RAM is stored information about the printed circuit assembly, including the current revision level of the assembly. This information may be accessed by a user through a dedicated bus and hardware designed for this task. Additionally, through the dedicated bus and hardware, the user may update the information within the printed circuit assembly.

### Brief Description of the Drawings

Figure 1 shows a block diagram of various printed circuit assemblies coupled to each other through a bus in accordance with a preferred embodiment of the present invention.

Figure 2 shows how certain of the printed circuit assemblies in Figure 2 may be arranged in slots in a cabinet.

Figure 3 shows an embodiment of an interface which exists in each printed circuit assembly shown in Figure 1, which is used to access the bus also shown in Figure 1.

Figure 4 and Figure 5 show various timing diagrams describing data flow to and from the interface shown in Figure 3.

Figure 6 is a block diagram of processor development hardware in accordance with the preferred embodiment of the present invention.

### Description of the Preferred Embodiment

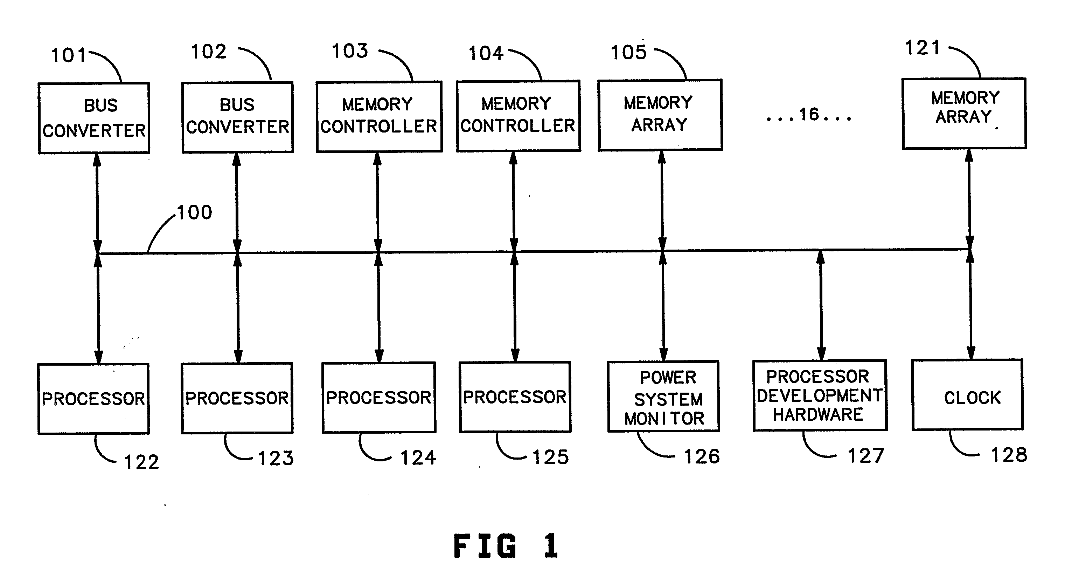

Figure 1 shows a bus 100. Bus 100 is wholly dedicated to transfer information describing printed circuit assemblies (PCA). Shown coupled to bus 100 are the following PCAs: a bus converter 101, a bus converter 102, a memory controller 103, a memory controller 104, a memory array 105 and a memory array 106 which are representative of sixteen memory arrays, a processor 122, a processor 123, a processor 124, a processor 125, a power system monitor 126, processor development hardware (PDH) 127 and a clock 128.

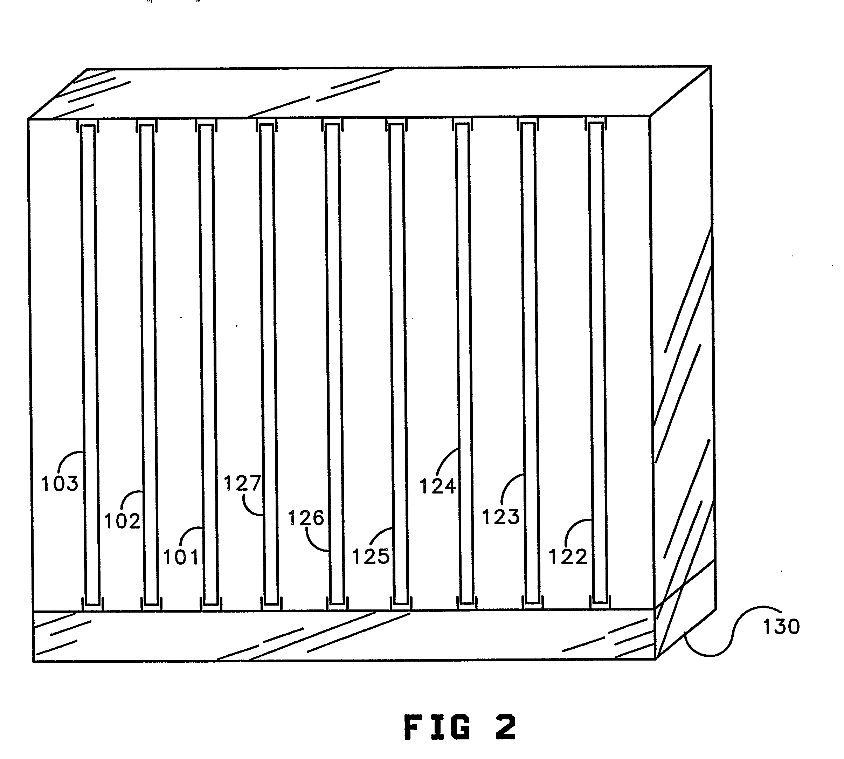

Typically the PCAs shown in Figure 1 will be mounted in a computer cabinet. Figure 2 shows how processor 122, processor 123, processor 124, processor 125, power system monitor 126, PDH 127, bus converter 101, bus converter 102 and memory controller 103 might be placed within slots in a computer cabinet 130.

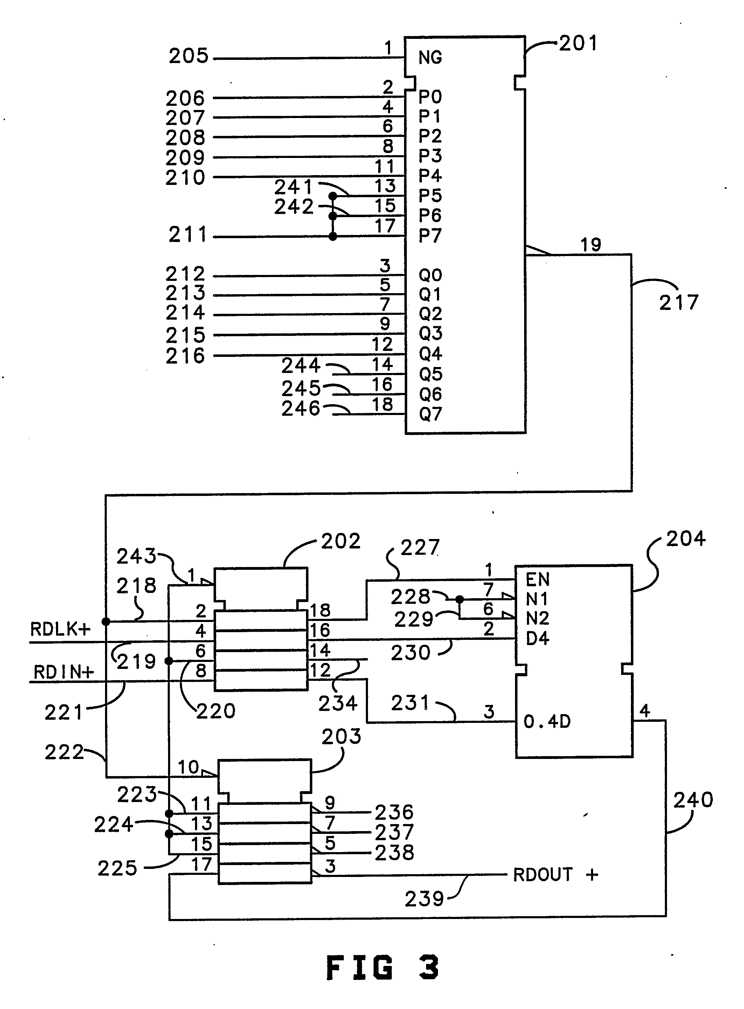

Each PCA shown in Figure 1 contains a special interface to bus 100. A block diagram of this special interface is shown in Figure 3. The interface consists of four chips interconnected as shown. Chips 201, 202 and 203 are manufactured by Texas Instruments Incorporated, P.O. Box 225012, Dallas, Texas 75265. Chip 201 has a part number 75ALS520. Chip 202 and chip 203 have a part number 74ALS240N. A chip 204 is a 16 x 16 Bit Serial Nonvolatile Static RAM produced by Xicor Inc., and has a part number X2444.

Data bus 100 includes the following lines from the interface of each of the PCAs connected to bus 100: lines 205, 206, 207, 208, 209, 219, 221, and 239. Each of these lines are interconnected to the bus, and thus are interconnected with corresponding lines from interfaces in each of the PCAs connected to bus 100. Lines 241, 242, 211, 228 and 229 are all set at a logic 1. Lines 243, 220, 223, 224 and 225 are all set at logic 0. Lines 244, 245, 246, 243, 236, 237 and 238 are not connected. Lines 212, 213, 214, 215 and 216 give a unique five-bit address for each PCA. This unique five-bit address is determined by the slot the PCA is placed in. The unique address allows each PCA to be addressed individually.

Bus 100 is controlled by PDH 127. The following is a description of how PDH 127 interacts with the interface circuit shown in Figure 3, and thus with the interface circuit in each of the interfaces within PCAs coupled to bus 100.

PDH 127 places a five-bit address on lines 506, 507, 508, 509 and 510. PDH 127 raises line 205 to a logic 1. .Chip 201 checks to see if the address on lines 506-510 matches the unique five-bit address on lines 512-516. If so, line 205 is activated to logic 0, enabling chip 203. Chip 202 is always enabled; therefore, chip 202 receives the logic 0 at line 218, inverts the signal, and through line 227 enables chip 204. Once chip 204 is enabled, chip 204 is able to read a clock signal which PDH 127 places on line 219 and a data signal which PDH places on line 221. These signals are inverted by chip 202 and placed on lines 230 and 231 respectively. Additionally, once chip 203 is activated, chip 204 may transmit data to PDH 127 by placing the information on line 240. This information is inverted by chip 203 and placed on line 239, where it is read by PDH 127.

Chip 204 is able to contain 32 bytes of information. In the preferred embodiment the following information is stored by each PCA: an assembly number which indicates the type of board, e.g., memory array, processor, etc.; a date code which indicates what revision of the board currently resides in the PCA; A hardware identification number which is used to define the processor type, a serial number for the board, a division number, which indicates the company division which manufactures the board; boot identification number, which indicates which board will boot the system; and a software identification number which further defines the processor type. In addition a byte is reserved to store the unique five-bit address of each PCA. In the current embodiment, the Assembly number requires five bytes, so the last byte of address 0010, is reserved for PDH 127. However, this information is not actually stored in chip 204 because the information is already available to PDH 127. The following table lists how the information is arranged in sixteen 16-bit words stored in chip 204.

Table 1

| ADDR | INFORMATION STORED |
|---|---|
| 0000 | Assembly Number |
| 0001 | " |
| 0010 | " |
| 0011 | Date Code |
| 0100 | Hardware Identification Number |
| 0101 | " |
| 0110 | Serial number |
| 0111 | " |
| 1000 | " |
| 1001 | Division Number |
| 1010 | Boot Identification Number |
| 1011 | " |
| 1100 | Software Identification Number |
| 1101 | " |
| 1110 | Unused |
| 1111 | " |

The following explains how chip 204 receives and sends information. More complete information is available from the data sheet for this part.

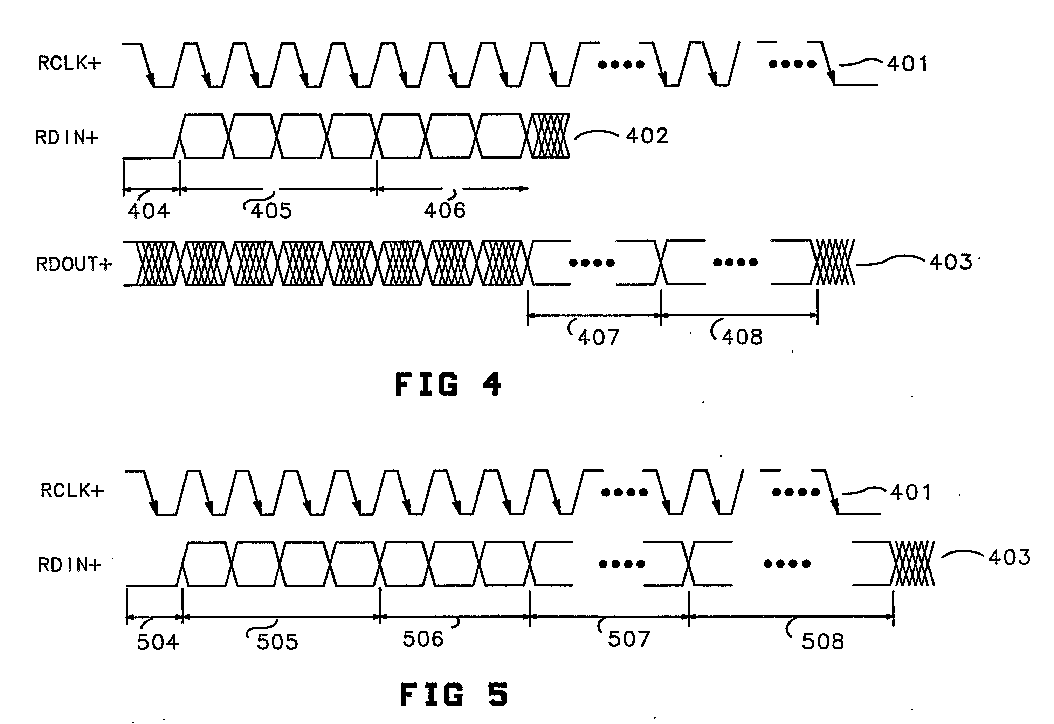

Figure 4 is a timing diagram indicating how data may be accessed from chip 204. Figure 4 shows a clock signal (RCLK+) 401 which is placed on line 219, an input signal (RDIN+) 402 to chip 204, which is placed on line 221, and a output signal (RDOUT+) 403 which is placed on line 239. As can be seen from Figure 4, chip 204 sends or receives one bit of information per clock cycle. After being enabled chip 204 looks for a command start bit 404. These are followed by four bits 405 indicating an address within the memory array within chip 204. The address is followed by 3 bits 406 which contain a command. This command may be a "read" or a "write" or a general command which specifies chip 204 to perform some function internally. If the command is a read, as in Figure 4, data is accessed from chip 204. Immediately upon receiving a command to read chip 204 places a first byte 407 and a second byte 408 on line 240 through chip 203 to line 239. First byte 407 and second byte 408 contain data stored within chip 204 at the address specified by bits 405.

Figure 5 is a timing diagram indicating how information may be stored by chip 204. Figure 5 shows clock signal 401 and input signal 402 as they are used to write data into chip 204. After being enabled chip 204 looks for a command start bit 504. These are followed by four bits 505 indicating an address within the memory array within chip 204. The address is followed by 3 bits 506 which contain a command. If the command is a write, as in Figure 5, data is written to chip 204. Upon receiving a command to write, chip 204 continues to reads a first byte 507 and a second byte 508 on line 240 which are placed on line 221. First byte 507 and second byte 508 contain data to be stored within chip 204 at the address specified by bits 505.

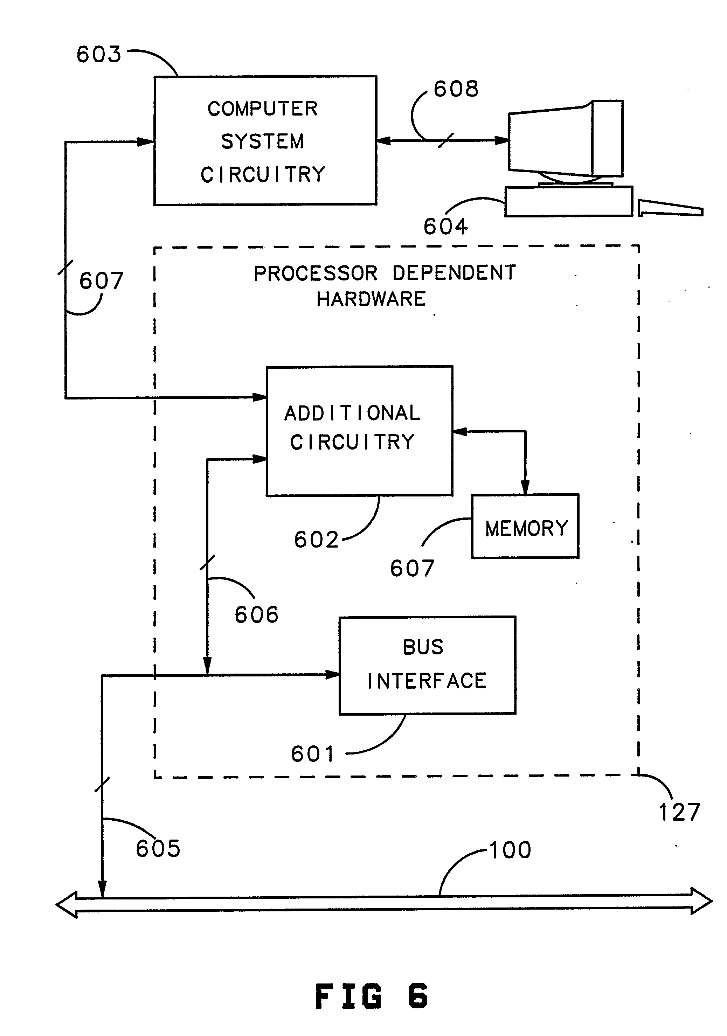

Figure 6 shows a block diagram of PDH 127. A bus interface 601 essentially comprises the interface shown in Figure 3. Bus interface 601 is coupled to bus 100 through lines 605. Additional circuitry 602 is shown coupled to lines 605 through lines 606. It is through lines 606 and their associated drivers within additional circuitry 602, that PDH 127 communicates with PCAs connected to bus 100. PDH 127 communicates with computer system circuitry 603 through lines 607. Computer system circuitry 603 may include some or all of the PCAs shown in Figure 1. Although PDH 127 controls data flow through bus 100, PDH 127 receives instructions from computer system circuitry 603 as to what information PDH 127 should require to be accessed or stored. Ultimately a User (not shown) queries computer system circuitry 603 as to biographical information about PCAs within the computing system. For instance a user may do so by using a terminal 604 coupled to computer system 603 through lines 608. Computer system circuitry 603 through lines 607 requests PDH 127 to find this information. PDH through lines 606 requests this information from the PCAs through bus 100.

Since bus 100 is not a high speed bus it may be optimal for PDH 127 to request information from each PCA at start-up time. PDH uses bus 100 to secure the biographical information from each PCA, this information may be stored in a memory 607. When biographical information is requested, PDH 127 may access this information from memory 607, saving the time required to access this information through bus

4

100.

**Claims**

1. In a computer system which includes a plurality of printed circuit assemblies (101-105, 121-128), an apparatus for allowing the electronic storage and retrieving of information about each printed circuit assembly, the apparatus comprising:

memory means (617, 601) within each printed circuit assembly (101-105, 121-128) for storing information about that printed circuit assembly; and,

retrieval and storage means (100), coupled to each printed circuit assembly, for electrically retrieving the information from each printed circuit assembly and making the information available to a user, and for enabling a user to electronically change the information.

2. An apparatus as in claim 1 wherein the retrieval and storage means comprises a bus (100) coupled to each printed circuit assembly and wholly dedicated to the electronic storage and assembly of information about each printed circuit assembly.

3. An apparatus as in claim 2 wherein the memory means comprises an interface to the bus (100) comprising an interaction means (601) for interacting with the bus (100), and a non-volatile random access memory (617).

4. An apparatus as in claim 3 wherein a first printed circuit assembly (127) from the plurality of printed circuit assemblies (101-105, 121-128) controls all data transactions which occur on the bus (100).

5. An apparatus as in claim 4 wherein upon booting up the computing system, the first printed circuit assembly (127) secures the information from each of the printed circuit assemblies (101-105, 121-128) and stores the information within the first printed circuit assembly (127) whereby a user may access the information quickly.

6. An apparatus as in Claim 1 wherein the information within a printed circuit assembly includes information indicating the latest revision level of that printed circuit assembly.

7. A method for making information about printed circuit assemblies (101-105, 121-128) readily accessible to users, the method comprising the steps of:

(a) providing a memory (617) within each printed circuit assembly (101-105, 121-128) for storing information about the printed circuit assembly (101-105, 121-128), including information about the current revision level of the printed assembly (101-105, 121-128);

(b) storing information with a memory (617) within a particular printed circuit assembly information pertaining to the particular printed circuit assembly; and

(c) accessing the information within the memories electronically through a bus (100).

8. A method as in claim 7 additionally comprising the step:
(d) changing the information within the memories (617) electronically through a bus (100).

FIG 1

FIG 2

EP 0 308 043 A2

**FIG 3**

RCLK+ ⎍⎍⎍⎍⎍⎍⎍⎍⎍⎍ •••• ⎍⎍ •••• 401

RDIN+ ⬡⬡⬡⬡⬡⬡⬡ ▨ 402

404 405 406

RDOUT+ ▨▨▨▨▨▨▨▨▨▨▨ •••• ⬡ •••• ▨ 403

407 408

# FIG 4

EP 0 308 043 A2

RCLK+ ⎍⎍⎍⎍⎍⎍⎍⎍⎍⎍ •••• ⎍⎍ •••• 401

RDIN+ ⬡⬡⬡⬡⬡⬡⬡ •••• ⬡ •••• ▨ 403

504 505 506 507 508

# FIG 5

FIG 6